# EUROPÄISCHE PATENTSCHRIFT

(11) **EP 2 555 895 B1**
(45) Veröffentlichungstag und Bekanntmachung des Hinweises auf die Patenterteilung: **02.11.2016**
(21) Anmeldenummer: 11711923.0
(22) Anmeldetag: 04.04.2011
(51) Int. Cl.: B23D 77/10

(54) **SCHNEIDSYSTEM**
CUTTING SYSTEM
SYSTEME DE COUPE

(30) Priorität: 08.04.2010 DE 102010014186; 03.04.2010 DE 102010014011
(43) Veröffentlichungstag der Anmeldung: 13.02.2013
(73) Patentinhaber: Gühring OHG, 72458 Albstadt (DE)
(72) Erfinder: BOZKURT, Lutfi, 72474 Winterlingen (DE)
(74) Vertreter: Meitinger, Thomas Heinz
(86) Internationale Anmeldenummer: PCT/EP2011/055222
(87) Internationale Veröffentlichungsnummer: WO 2011/121138

(56) Entgegenhaltungen:
- WO-A1-01/26854
- CH-A5- 666 643
- FR-A- 759 981
- JP-A- 57 144 606
- US-A- 3 276 101
- US-B1- 6 575 672

## Beschreibung

### BESCHREIBUNG

### GEBIET DER ERFINDUNG

Die vorliegende Erfindung betrifft ein Schneidsystem gemäß dem Oberbegriff des Anspruchs 1. Ein solches Schneidsystem ist aus US 6575672 B bekannt.

### HINTERGRUND DER ERFINDUNG

Im Stand der Technik sind Dehnwerkzeuge bekannt, die in ein Schneidwerkzeug eingebracht werden können, um Abschnitte des Schneidwerkzeugs dehnen bzw. weiten zu können. Hierdurch soll eine Feinjustierbarkeit der Schneidengeometrie ermöglicht werden.

### ZUSAMMENFASSUNG DER ERFINDUNG

Das Dehnwerkzeug sollte dabei für die Bedienmannschaft leicht bedienbar sein, was z.B. durch das Antreiben des Dehnwerkzeugs durch verstellende Mittel, die insbesondere in der Nähe der Schneiden angeordnet sind, sicher gestellt werden kann.

Eine Aufgabe ist daher, ein Schneidsystem gemäß dem Anspruch 1 zur Verfügung zu stellen, die eine leichte Bedienbarkeit des Dehnwerkzeugs innerhalb eines Schneidwerkzeugs bzw. Schneidsystems ermöglichen können.

Durch die Verwendung eines Dehnwerkzeugs, das in die Ausnehmung eines Schneidwerkzeugs eingebracht werden kann, kann ein Aufweiten des Schneidwerkzeugs erreicht werden, mit dem Ziel den radialen Abstand der Schneiden des Schneidwerkzeugs hochgenau einstellen zu können.

Schneidwerkzeug kann insbesondere eine Reibahle bzw. Stufenreibahle sein.

Der Schneidkopf kann eine oder beliebig viele Schneiden aufweisen, wobei die Schneiden aus PKD oder CBN bestehen können und am Schneidkopf an- oder eingelötet sein können. In einer alternativen Ausführungsform können die Schneiden als Wechselplatten ausgebildet sein.

Erfindungsgemäß weist das Dehnwerkzeug einen Außenkonus auf, der vorzugsweise zumindest teilweise an einem Innenkonus eines Schneidkopfs anliegen kann. Durch Einpressen des Dehnwerkzeugs in die Ausnehmung kann der Schneidkopf aufgeweitet werden, wodurch die Schneidengeometrie hoch präzise eingestellt werden kann.

Beispielhafte Ausführungsformen werden in den abhängigen Ansprüchen beschrieben.

Gemäß einer beispielhaften Ausführungsform der Erfindung wird ein Dehnwerkzeug zur Verfügung gestellt, wobei das Dehnwerkzeug ein Außengewinde umfasst.

Mit Hilfe eines Außengewindes kann das Dehnwerkzeug gegriffen werden und z.B. in axialer Richtung verfahren werden, wodurch die Eindringtiefe des Dehnwerkzeugs in das Schneidwerkzeug eingestellt werden kann.

In einer weiteren erfindungsgemäßen Ausführungsform wird ein Schneidwerkzeug zur Verfügung gestellt, wobei das Schneidwerkzeug umfasst: ein Schneckengetriebe mit einem Schneckenrad und einer Schnecke, wobei das Schneckengetriebe ein Innengewinde aufweist.

Die Anordnung eines Schneckengetriebes kann zum Verfahren des Dehnwerkzeugs genutzt werden, wobei eine leichte Bedienbarkeit des Dehnwerkzeugs dadurch sicher gestellt werden kann, dass ein Antreiben des Schneckengetriebes z.B. durch einen Steckschlüssel in direkter Nachbarschaft zum schneidenden Abschnitt des Schneidwerkzeugs ermöglicht werden kann.

Gemäß einem weiteren Ausführungsbeispiel der vorliegenden Erfindung wird ein Schneidwerkzeug zur Verfügung gestellt, wobei das Schneckengetriebe durch mindestens ein Wälzlager innerhalb des Schneidwerkzeugs gelagert ist.

Gemäß einer beispielhaften Ausführungsform der Erfindung wird ein Schneidsystem zur Verfügung gestellt, wobei der Außenkonus am Innenkonus zumindest abschnittsweise anliegend ist.

In einer weiteren erfindungsgemäßen Ausführungsform wird ein Schneidsystem zur Verfügung gestellt, wobei der radiale Abstand der Schneide von der Längsachse des Schneidwerkzeugs durch ein Bewegen des Dehnwerkzeugs in Richtung der Längsachse variierbar ist.

Gemäß einem weiteren Ausführungsbeispiel der vorliegenden Erfindung wird ein Schneidsystem zur Verfügung gestellt, wobei das Innengewinde in das Außengewinde eingreifbar ausgebildet ist.

Gemäß einer beispielhaften Ausführungsform der Erfindung wird ein Schneidsystem zur Verfügung gestellt, wobei durch eine Drehung des Schneckenrads ein Bewegen des Dehnwerkzeugs in Längsrichtung des Schneidwerkzeugs herbeiführbar ist.

Als eine Idee der Erfindung kann angesehen werden, ein Schneidsystem zur Verfügung zu stellen, durch das hochgenau der radiale Abstand einer Schneide von der Längsachse eines Schneidwerkzeugs eingestellt werden kann. Erfindungsgemäß wird ein Außenkonus in eine z.B. zentral angeordnete Ausnehmung eines Schneidwerkzeugs eingeführt, wobei der Außenkonus so tief in die Ausnehmung eingepresst werden kann, bis der gewünschte radiale Abstand eingestellt ist.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
- Figur 1: ein rotierbares Schneidwerkzeug in einer Seitenansicht,
- Figur 2: das rotierbare Schneidwerkzeug aus Figur 1 in einer Vorderansicht,
- Figur 3: ein weiteres rotierbares Schneidwerkzeug mit einem Dehnwerkzeug,
- Figur 4: ein Dehnwerkzeug,
- Figur 5: ein weiteres Dehnwerkzeug in einer perspektivischen Ansicht,
- Figur 6: ein weiteres rotierbares Schneidwerkzeug in einer Ausführungsform als Stufenreibahle,
- Figur 7: einen Schneidenträgerring,
- Figur 8: einen Schneidkopf mit einer Kühlmittelversorgung,
- Figur 9: ein Schneidsystem,
- Fig. 10: eine Stufenreibahle,
- Fig. 11: einen Schneidkopf,
- Fig. 12: ein Dehnwerkzeug,
- Fig. 13: ein weiteres Dehnwerkzeug,
- Fig. 14: ein weiteres Dehnwerkzeug.

### DETAILLIERTE BESCHREIBUNG BEISPIELHAFTER AUSFÜHRUNGSFORMEN

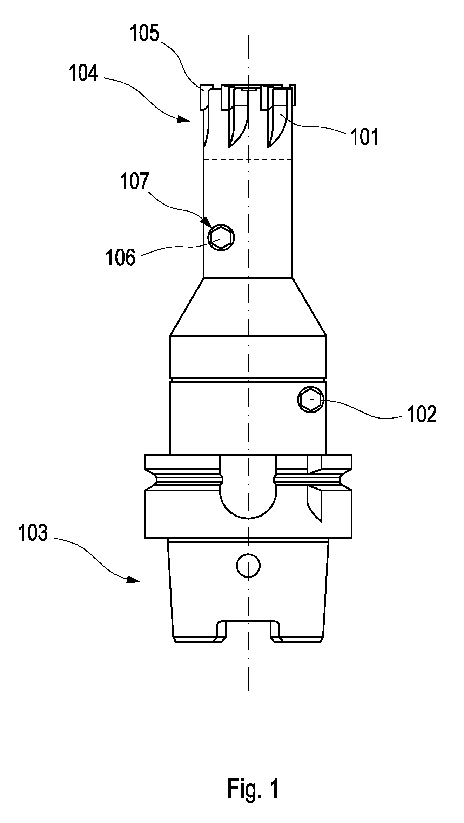

Fig. 1 zeigt ein rotierbares Schneidwerkzeug mit einem Schneidkopf 104, wobei der Schneidkopf 104 Schneiden, die als Schneidplatten 105 ausgebildet sein können, und Spannuten 101 aufweisen kann. Die Schneiden bzw. Schneidplatten 105 können aus PKD oder CBN bestehen und an dem Schneidkopf 104 an- bzw. eingelötet werden. In einer alternativen Ausführungsform können die Schneiden bzw. Schneidplatten 105 als Wechselplatten ausgebildet sein. Das rotierbare Schneidwerkzeug ist mit einem Hohlschaftkegel 103 versehen, um eine Kopplung an eine Motorspindel zu ermöglichen. Das Schneidwerkzeug weist einen Eingriff 107 auf, in den z.B. ein Steckschlüssel eingreifen kann, wobei durch z.B. eine Drehung des Steckschlüssels eine Schnecke 106 angetrieben werden kann. Die Schnecke 106 kann z.B. einen Innensechskant aufweisen, um über den Steckschlüssel die Übertragung eines Drehmoments auf die Schnecke 106 ermöglichen zu können. Das Schneidwerkzeug kann als Reibahle ausgebildet sein.

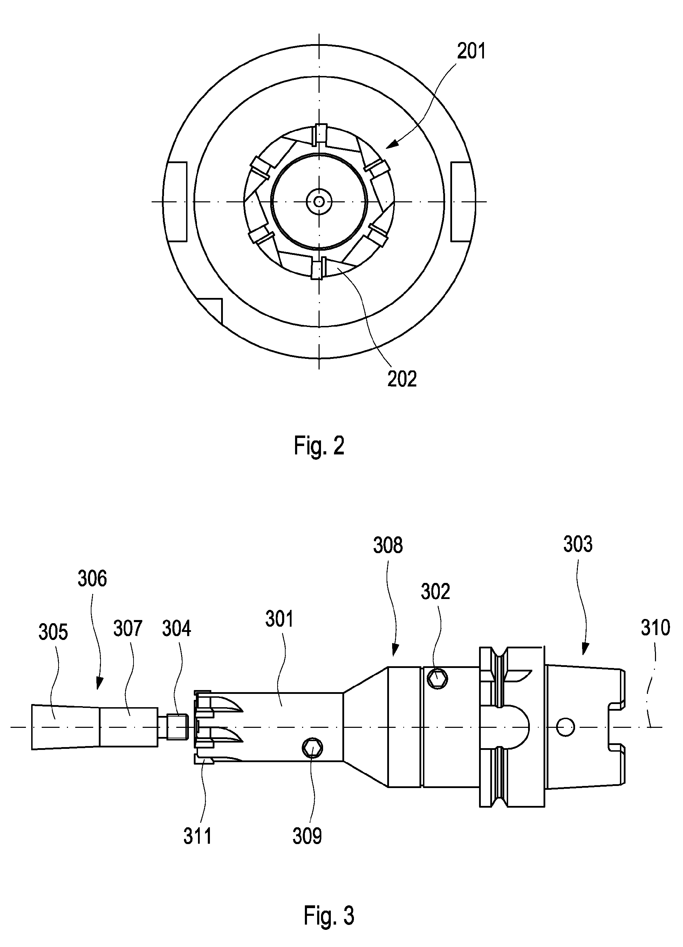

Fig. 2 zeigt ein rotierbares Schneidwerkzeug mit einem Schneidkopf 201, wobei der Schneidkopf 201 Schneiden, die als Schneidplatten 202 ausgeformt sein können, aufweisen kann.

Fig. 3 zeigt ein Schneidsystem mit einem Dehnwerkzeug 306, das einen Abschnitt mit einem Außenkonus 305 und einem zylindrischen Abschnitt 307 aufweisen kann. Das Dehnwerkzeug 306 ist ferner mit einem Vorsprung versehen, auf dem ein Außengewinde 304 angeordnet sein kann. Das Schneidsystem umfasst außerdem ein Schneidwerkzeug 308 mit einem Schneidkopf 301, das einen Hohlschaftkegel 303 umfassen kann. Erfindungsgemäß kann das Dehnwerkzeug 306 nach rechts in eine Ausnehmung des Schneidkopfs 301 eingefahren werden. Hierbei kann das Außengewinde 304 des Dehnwerkzeugs 306 von einem Innengewinde gegriffen werden, wobei das Innengewinde beispielsweise an einem Schneckenrad angeordnet sein kann. Ferner kann das Schneckenrad mit einer Schnecke 309 angetrieben werden. Hierdurch kann das Dehnwerkzeug 306 weiter nach rechts verfahren werden und z.B. in Kontakt mit einem Innenkonus des Schneidkopfs 301 geraten, wodurch z.B. der Außenkonus 305 an dem Innenkonus anliegen kann. Falls das Dehnwerkzeug 306 noch weiter nach rechts verfahren wird, kann der Schneidkopf aufgeweitet werden, wodurch der radiale Abstand der Schneidplatten 311 des Schneidkopfs 301 zur Längsachse 310 verändert werden kann. In einer alternativen Ausführungsform kann das Außengewinde 304 als Differentialgewinde ausgeformt sein.

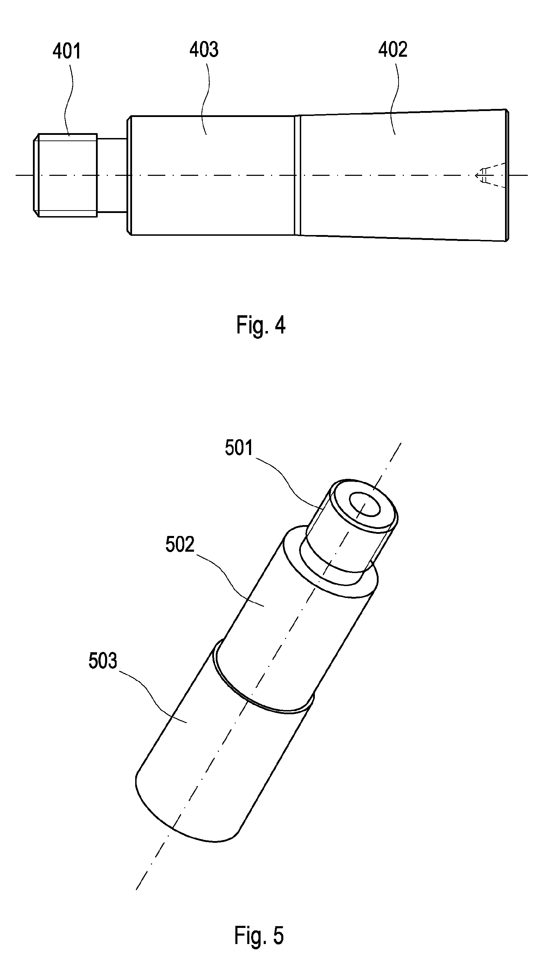

Fig. 4 zeigt ein Dehnwerkzeug mit einem Vorsprung, das ein Außengewinde 401, einen zylindrischen Abschnitt 403 und einen Außenkonus 402 aufweisen kann.

Fig. 5 zeigt ein Dehnwerkzeug in einer perspektivischen Ansicht mit einem Außengewinde 501, einem zylindrischen Abschnitt 502 und einem Außenkonus 503.

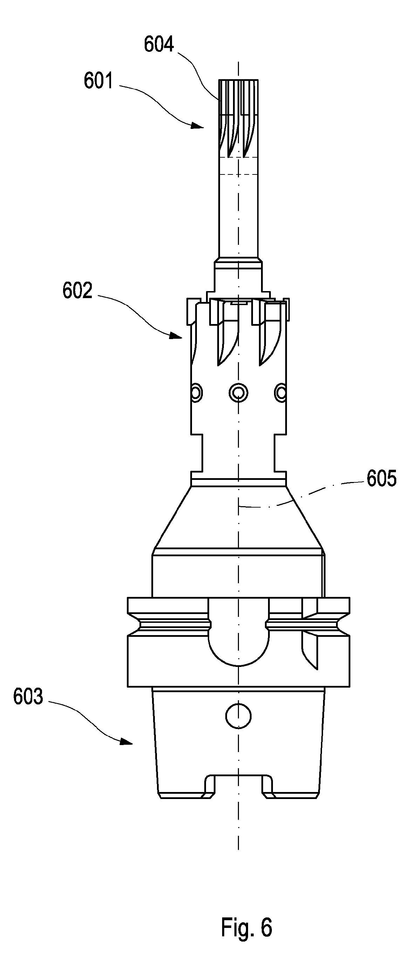

Fig. 6 zeigt eine Stufenreibahle mit einem ersten Schneidkopf 601 und einem zweiten Schneidkopf 602, wobei die Stufenreibahle einen Hohlschaftkegel 603 zur Kopplung an eine Motorspindel aufweisen kann. Der erste Schneidkopf 601 kann eine Ausnehmung zur Aufnahme eines Dehnwerkzeugs aufweisen, um den radialen Abstand der Schneiden 604 von der Längsachse 605 der Stufenreibahle einstellen zu können. In einer alternativen Ausführungsform kann der erste Schneidkopf 601 als Dehnwerkzeug für den zweiten Schneidkopf 602 verwendet werden, um den radialen Abstand der Schneidplatten des zweiten Schneidkopfs 602 von der Längsachse 605 einstellen zu können.

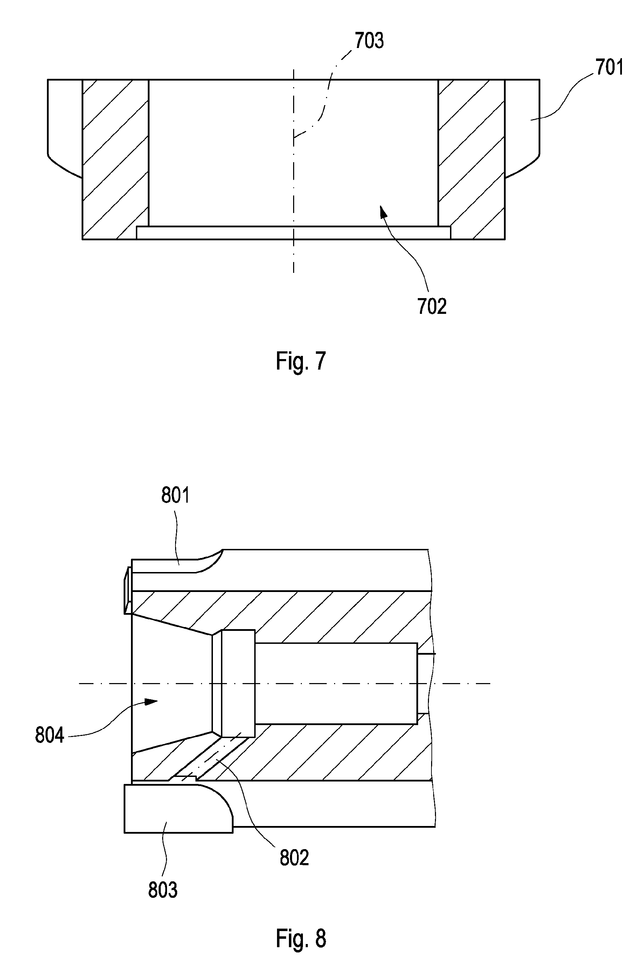

Fig. 7 zeigt einen Schneidenträgerring mit einer Ausnehmung 702 zur Aufnahme eines Schneidkopfs. Der Schneidenträgerring weist Schneidplatten 701 auf. Der aufzunehmende Schneidkopf kann als Dehnwerkzeug dienen, um den radialen Abstand der Schneidplatten 701 von der Längsachse 703 einstellen zu können.

Fig. 8 zeigt einen Schneidkopf mit Spannuten 801, Schneidplatten 803 und einem Kühlkanal 802 zur Versorgung der Schneidplatte 803 mit Kühl- und/oder Schmiermittel. Ferner weist der Schneidkopf eine Ausnehmung 804 auf, die einen vorderen Abschnitt aufweisen kann, der kegelstumpfförmig ausgebildet sein kann. In diese Ausnehmung 804 kann z.B. ein Dehnwerkzeug eingesetzt werden, um den Schneidkopf aufzuweiten.

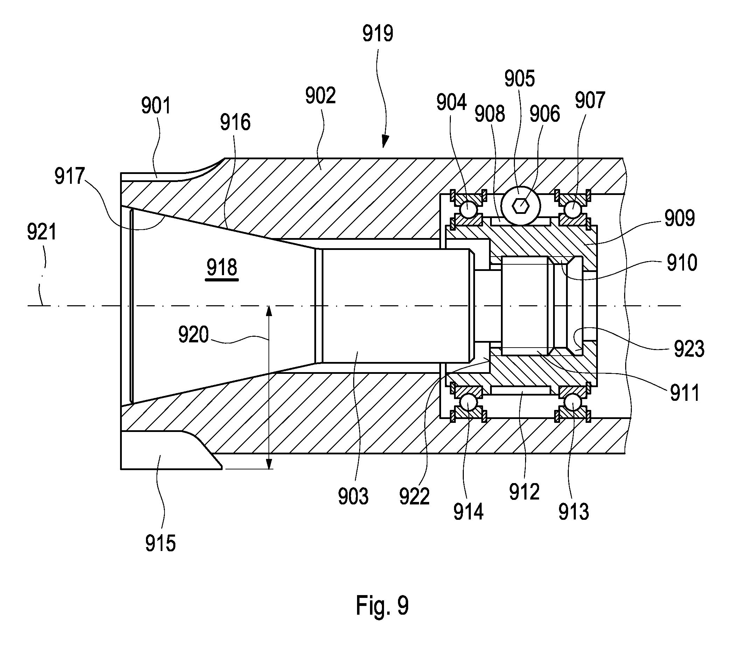

Fig. 9 zeigt ein Schneidsystem mit einem Schneidkopf 919 und einem Dehnwerkzeug 918, wobei das Dehnwerkzeug 918 in eine Ausnehmung des Schneidkopfs 919 eingesetzt ist. Das Dehnwerkzeug 918 kann dabei einen Außenkonus 916 aufweisen, der an einen Innenkonus 917 der Ausnehmung des Schneidkopfs 919 anliegen kann. Das Dehnwerkzeug 918 kann ferner ein Außengewinde 911 aufweisen, dessen Zähne in Zähne eines Innengewindes 910 eingreifen können. Das Innengewinde 910 kann an einem Schneckenrad 909 angeordnet sein, wobei das Schneckenrad 909 Teil eines Schneckengetriebes sein kann. Das Schneckengetriebe kann das Schneckenrad 909 mit Zähnen 908, 912 und eine Schnecke 905 umfassen, wobei die Zähne der Schnecke 905 in die Zähne 908, 912 des Schneckenrads eingreifen können. Das Schneckengetriebe kann innerhalb des Schneidkopfs 919 über Wälzlager 904, 907, 913, 914 gelagert sein, wobei die Wälzlager 904, 907, 913, 914 als Kugellager ausgebildet sein können. Die Schnecke 905 kann z.B. einen Innensechskant (Inbus) 906, einen Schlitz, einen Kreuzschlitz, einen Torx, einen Vierkant oder eine sonstige Eingriffsmöglichkeit aufweisen. In den Eingriff 906 der Schnecke 905 kann z.B. ein Steckschlüssel eingesetzt werden, wobei durch eine Drehung des Steckschlüssels die Schnecke 905 und dadurch auch das Schneckenrad 909 gedreht bzw. in Rotation gebracht werden kann. Hierdurch kann das Dehnwerkzeug 918 nach links herausgefahren werden bzw. nach rechts hinein verfahren werden, wobei das Dehnwerkzeug 918 mit seinem Außenkonus 916 gegen den Innenkonus 917 gepresst werden kann, wodurch der radiale Abstand 920 der Schneidplatte 915 von der Längsachse 921 vergrößert werden kann. Die Kante 922 des Schneckenrads 909 kann als Anschlag für den zylindrischen Abschnitt 903 des Dehnwerkzeugs 918 genutzt werden, um ein Überdehnen des Schneidenkopfs 919 und einen möglichen Bruch zu verhindern. Die Kante 923 des Schneckenrads 909 kann als Anschlag für den Vorsprung des Dehnwerkzeugs 918 mit seinem Außengewinde 911 genutzt werden. Aufgrund der Anordnung eines Schneckengetriebes mit seinem Schneckenrad 909 und der Schnecke 905 wird kein Drehmoment auf das Dehnwerkzeug 918 übertragen. Deswegen kann sich auch kein Rotieren des Dehnwerkzeugs 918 um seine Längsachse 921 ergeben. Eine Verdrehsicherung, um eine Rotation vermeiden zu können, kann daher entfallen.

In einer alternativen Ausführungsform, bei der durch zusätzliche Umstände ein Drehmoment auf das Dehnwerkzeug 918 übertragen werden kann, kann eine Verdrehsicherung dadurch am Schneidsystem angeordnet werden, dass ein Stift in die Ausnehmung des Schneidkopfs 919 hineinragt und in einer Nut, die am Dehnwerkzeug 918 angebracht ist, geführt werden kann. Hierdurch kann ein sich Drehen des Dehnwerkzeugs 918 um seine eigene Längsachse 921 vermieden werden.

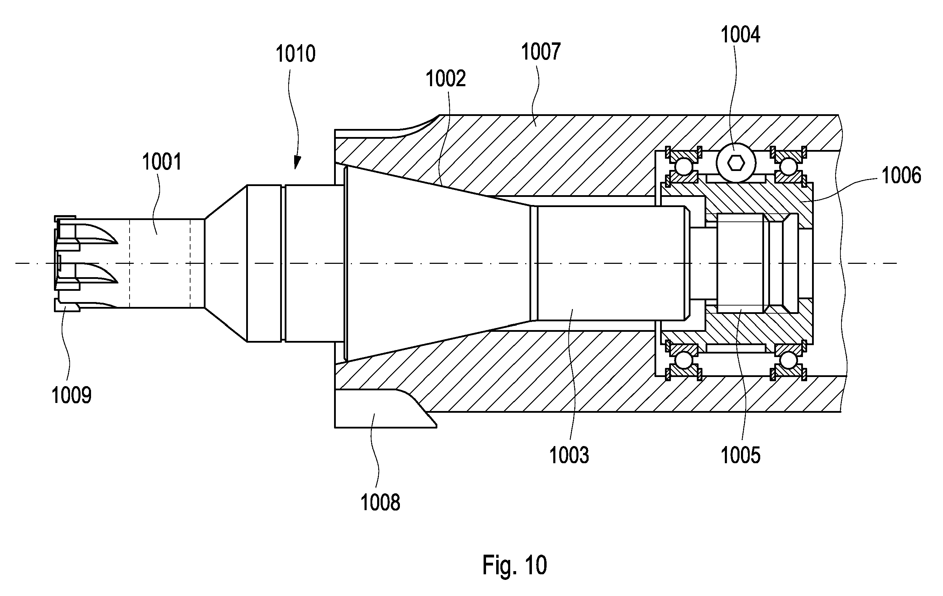

Fig. 10 zeigt eine Stufenreibahle mit ersten Schneidplatten 1008 und zweiten Schneidplatten 1009. Der radiale Abstand der ersten Schneidplatten 1008 von der Längsachse des Schneidkopfs 1007 kann durch das Dehnwerkzeug 1010 eingestellt werden, wobei das Dehnwerkzeug 1010 mittels eines Schneckengetriebes mit einem Schneckenrad 1006 und einer Schnecke 1004 nach links oder nach rechts verfahren werden kann. Wird das Dehnwerkzeug 1010 nach rechts verfahren, so können die Schneidplatten 1008 weiter radial nach außen gepresst werden. Das Dehnwerkzeug 1010 kann außer einem Außenkonus 1002 und einem zylindrischen Abschnitt 1003 einen weiteren Schneidkopf 1001 mit weiteren Schneidplatten 1009 aufweisen, wodurch z.B. eine zweistufige Reibahle realisiert werden kann. In einer alternativen Ausführungsform kann in die weitere Reibahle ein weiteres Dehnwerkzeug mit noch weiterer Reibahle eingesetzt werden, wodurch eine 3-stufige Reibahle ermöglicht werden kann. In weiteren alternativen Ausführungsformen können Reibahle mit beliebig vielen Stufen zur Verfügung gestellt werden.

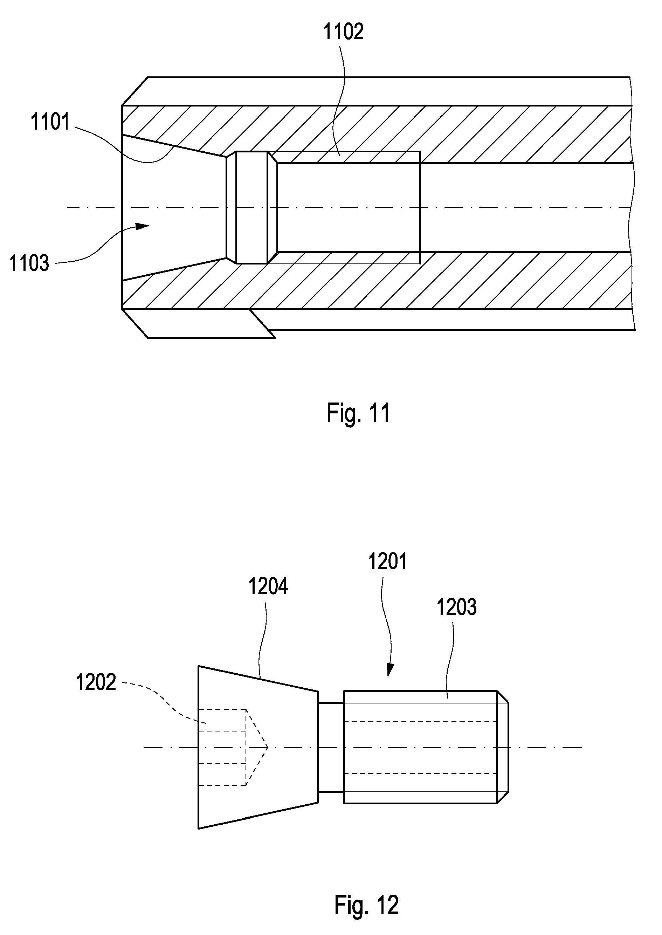

Fig. 11 zeigt den Schneidkopf 1001 der Fig. 10 in einem Längsschnitt, wobei der Schneidkopf eine Ausnehmung 1103 aufweist, die einen Innenkonus 1101 und einen zylindrischen Abschnitt mit einem Innengewinde 1102 umfassen kann.

Fig. 12 zeigt ein Dehnwerkzeug 1201 mit einem Außenkonus 1204 und einem zylindrischen Abschnitt mit Außengewinde 1203, wobei das Dehnwerkzeug 1201 in die Ausnehmung 1103 des Schneidkopfs der Fig. 11 eingesetzt werden kann. Das Dehnwerkzeug 1201 kann mit seinem Außengewinde 1203 in das Innengewinde 1102 des Schneidkopfs der Fig. 11 eingeschraubt werden, wodurch der Außenkonus 1204 am Innenkonus 1101 zu liegen kommen kann. Durch ein weiteres Einschrauben des Dehnwerkzeugs 1201 in die Ausnehmung 1103 des Schneidkopfs der Fig. 11 kann der Schneidkopf aufgeweitet werden. Das Dehnwerkzeug 1201 kann einen Eingriff z.B. für einen Steckschlüssel aufweisen, um das Dehnwerkzeug 1201 in den Schneidkopf der Fig. 11 einschrauben zu können, wobei der Eingriff z.B. als Innensechskant ausgebildet sein kann. In einer alternativen Ausführungsform kann der Schneidkopf der ersten Stufe, der zweiten Stufe, mehrerer Stufen oder alle Stufen einer Stufenreibahle mit einem Dehnwerkzeug nach Fig. 9 aufgeweitet bzw. in seinem radialen Abstand zur Längsachse des Schneidkopfs angepasst werden.

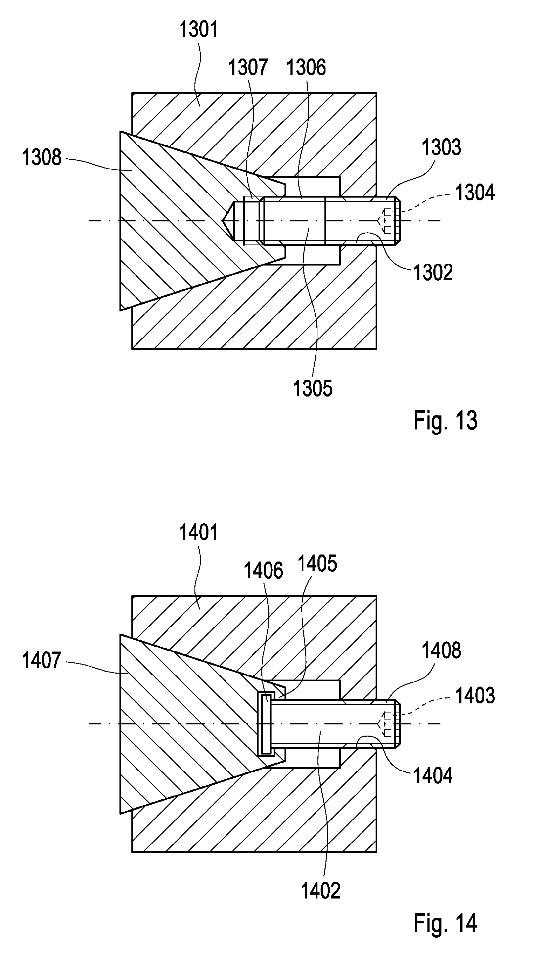

Fig. 13 zeigt eine alternative Ausführungsform der Erfindung mit einem Gewindebolzen 1305 mit einem Differentialgewinde (Differenzgewinde), auf dem zwei Bereiche mit unterschiedlichen Gewinden 1303, 1306 angeordnet sind. Ein erstes Außengewinde 1306 des Gewindebolzens 1305 kann in ein passendes Innengewinde 1307 des Dehnwerkzeugs 1308 eingreifen und ein zweites Außengewinde 1303 des Gewindebolzens 1305 kann in ein passendes Innengewinde 1302 des Schneidkopfs 1301 eingreifen. Die Außengewinde 1303, 1306 weisen unterschiedliche Steigungen auf. Der Gewindebolzen 1305 kann einen Innensechskant 1304 aufweisen, in den beispielsweise ein Steckschlüssel eingreifen kann. Eine Drehung des Steckschlüssels führt aufgrund der unterschiedlichen Gewindetypen zu einer rein translatorischen Bewegung des Dehnwerkzeugs 1308 in Richtung der Längsachse des Dehnwerkzeugs 1308.

Fig. 14 zeigt eine weitere alternative Ausführungsform eines Dehnwerkzeugs 1407 in einem Schneidkopf 1401, wobei das Außengewinde 1408 eines Gewindebolzens 1402 in das Innengewinde 1404 des Schneidkopfs 1401 eingreifen kann. Der Gewindebolzen 1402 kann einen Kopf 1406 aufweisen, der in einer Ausnehmung des Dehnwerkzeugs 1407 gelagert sein kann, wobei der Kopf 1406 derart gelagert sein kann, dass der Kopf 1406 innerhalb der Ausnehmung frei rotieren kann. Durch einen Vorsprung 1405 kann das Herausspringen des Kopfes 1406 aus der Ausnehmung verhindert werden. In einer alternativen Ausführungsform kann der Kopf 1406 als Nase und/oder stabförmig ausgebildet sein, wobei der Kopf 1406 stets so ausgebildet ist, dass der Vorsprung 1405 ein Herausfahren des Kopfes 1406 aus der Ausnehmung des Dehnwerkzeugs 1407 verhindern kann. Der Gewindebolzen 1402 kann einen Innensechskant zum Eingriff für einen Steckschlüssel aufweisen, wobei der Steckschlüssel dazu genutzt werden kann, den Gewindebolzen 1402 zu drehen. Eine Drehbewegung des Gewindebolzens 1402 kann zu einer rein translatorischen Bewegung des Dehnwerkzeugs 1407 in Richtung der Längsachse des Dehnwerkzeugs 1407 führen, wobei sich das Dehnwerkzeug 1407 aufgrund der Lagerung des Kopfes 1406 innerhalb der Ausnehmung des Dehnwerkzeugs 1407, die eine beliebige Rotation des Kopfs 1406 ohne Mitnahme des Dehnwerkzeugs 1407 ermöglichen kann, nicht drehen muss.

Erfindungsgemäß ist eine Hülse zwischen Hohlschaftkegel des Schneidkopfs und Außenkonus des Dehnwerkzeugs vorgesehen sein, wobei die Hülse dazu führt, dass ein besseres Gleiten von Dehnwerkzeug und Schneidkopf ermöglicht wird. Hierdurch wird ein genaueres und reproduzierbareres Einstellen des radialen Abstands der Schneidplatten zur Längsachse des Werkzeugs ermöglicht. Insbesondere wird hierdurch ein Verhaken von Außenkonus mit Hohlschaftkegel des Schneidkopfs vermieden, wodurch ruckartige Bewegungen zwischen Dehnwerkzeug und Schneidkopf verhindert werden. Die Hülse besteht aus einem härterem oder aus einem weicheren Material im Vergleich zum Außenkonus und/oder zum Schneidkopf. Die Hülse kann aus einem härterem Material im Vergleich zum Außenkonus und/oder zum Schneidkopf bestehen. Insbesondere kann die Hülse aus Kupfer, Messing, Kunststoff, Gummi oder einer sonstigen Plastikart bestehen. Ein besonders gutes Gleiten von Dehnwerkzeug und Schneidkopf kann insbesondere durch die Wahl des Materials der Hülse ermöglicht werden, wobei Kupfer, Messing, Kunststoff, Gummi oder eine sonstige Plastikart in dieser Beziehung besonders vorteilhaft erscheinen. Durch die Steigung der kegelförmigen Außen- oder Innenmantelfläche der Hülse kann auch bestimmt werden, wie fein bzw. wie stark eine Veränderung des radialen Abstands der Schneiden des Schneidkopfs von der Längsachse einstellbar ist. Ist der Außen- oder Innenkegelwinkel klein, kann eine sehr feine Einstellung ermöglicht werden. Bei einem größeren Kegelwinkel wird eine grobe Einstellung ermöglicht.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Spannut
- 102: Eingriff für Steckschlüssel
- 103: Hohlschaftkegel
- 104: Schneidkopf
- 105: Schneidplatte
- 106: Schnecke mit Innensechskant
- 107: Eingriff
- 201: Schneidkopf
- 202: Schneidplatte
- 301: Schneidkopf
- 302: Schnecke mit Innensechskant
- 303: Hohlschaftkegel
- 304: Außengewinde
- 305: Außenkonus
- 306: Dehnwerkzeug
- 307: zylindrischer Abschnitt
- 308: Schneidwerkzeug
- 309: Schnecke
- 310: Längsachse
- 311: Schneidplatte
- 401: Außengewinde
- 402: Außenkonus
- 403: zylindrischer Abschnitt
- 501: Außengewinde
- 502: zylindrischer Abschnitt
- 503: Außenkonus
- 601: Schneidkopf
- 602: weiterer Schneidkopf
- 603: Hohlschaftkegel
- 604: Schneidplatte
- 605: Längsachse
- 701: Schneidplatte
- 702: Ausnehmung
- 703: Längsachse
- 801: Spannut
- 802: Kühlkanal
- 803: Schneidplatte
- 804: Ausnehmung
- 901: Spannut
- 902: Schneidkopf
- 903: zylindrischer Abschnitt
- 904: Wälzlager
- 905: Schnecke
- 906: Innensechskant
- 907: Wälzlager
- 908: Zähne
- 909: Schneckenrad
- 910: Innengewinde
- 911: Außengewinde
- 912: Zähne
- 913: Wälzlager
- 914: Wälzlager
- 915: Schneidplatte
- 916: Außenkonus
- 917: Innenkonus
- 918: Dehnwerkzeug
- 919: Schneidkopf
- 920: radialer Abstand
- 921: Längsachse
- 922: Anschlag
- 923: Anschlag
- 1001: Schneidkopf
- 1002: Außenkonus
- 1003: zylindrischer Abschnitt
- 1004: Schnecke
- 1005: Außengewinde
- 1006: Schneckenrad
- 1007: Schneidkopf
- 1008: Schneidplatte
- 1009: Schneidplatte
- 1010: Schneidkopf
- 1101: Innenkonus
- 1102: Innengewinde
- 1103: Ausnehmung
- 1201: Dehnwerkzeug
- 1202: Innensechskant
- 1203: Außengewinde
- 1204: Außenkonus
- 1301: Schneidkopf
- 1302: Innengewinde
- 1303: Außengewinde
- 1304: Innensechskant
- 1305: Gewindebolzen
- 1306: Außengewinde
- 1307: Innengewinde
- 1308: Dehnwerkzeug
- 1401: Schneidkopf
- 1402: Gewindebolzen
- 1403: Innensechskant
- 1404: Innengewinde
- 1405: Vorsprung
- 1406: Scheibe
- 1407: Dehnwerkzeug
- 1408: Außengewinde

## Patentansprüche

1. Schneidsystem zur spanenden Bearbeitung eines Werkstücks, wobei das Schneidsystem umfasst:
ein Dehnwerkzeug (918), umfassend einen Außenkonus (916) zum radialen Aufweiten eines Abschnitts eines Schneidkopfs, wobei der Abschnitt eine Schneide (915) zur spanenden Bearbeitung eines Werkstücks aufweist und
ein rotierbares Schneidwerkzeug zur spanenden Bearbeitung des Werkstücks, wobei das Schneidwerkzeug umfasst: den Schneidkopf (919) mit einer Ausnehmung, wobei die Ausnehmung einen Innenkonus (917) aufweist, wobei die Ausnehmung zur Aufnahme des Außenkonus (916) vorgesehen ist,
wobei das Schneidsystem eine Hülse aufweist, wobei die Hülse zwischen Hohlschaftkegel des Schneidkopfs und Außenkonus des Dehnwerkzeugs angeordnet ist, **dadurch gekennzeichnet, dass** die Hülse im Vergleich zum Außenkonus und/oder zum Schneidkopf aus einem weicheren Material besteht, um ein besonders gutes Gleiten von Dehnwerkzeug und Schneidkopf zu ermöglichen.

2. Schneidsystem nach Anspruch 1, wobei das Dehnwerkzeug (918) ein Außengewinde (911) umfasst.

3. Schneidsystem nach einem der Ansprüche 1 oder 2, wobei das Schneidwerkzeug umfasst:
ein Schneckengetriebe mit einem Schneckenrad (909) und einer Schnecke (905), wobei das Schneckengetriebe ein Innengewinde (910) aufweist.

4. Schneidsystem nach Anspruch 3, wobei das Schneckengetriebe durch mindestens ein Wälzlager (904, 907, 913, 914) innerhalb des Schneidwerkzeugs gelagert ist.

5. Schneidsystem nach einem der vorhergehenden Ansprüche, wobei der Außenkonus (916) am Innenkonus (917) zumindest abschnittsweise anliegend ist.

6. Schneidsystem nach einem der vorhergehenden Ansprüche, wobei der radiale Abstand (920) der Schneide (915) von der Längsachse (921) des Schneidwerkzeugs durch ein Bewegen des Dehnwerkzeugs (918) in Richtung der Längsachse (921) variierbar ist.

7. Schneidsystem nach einem der Ansprüche 3 bis 6, wobei das Innengewinde (910) in das Außengewinde (911) eingreifbar ausgebildet ist.

8. Schneidsystem nach einem der vorhergehenden Ansprüche, wobei durch eine Drehung des Schneckenrads (909) ein Bewegen des Dehnwerkzeugs (918) in Längsrichtung des Schneidwerkzeugs herbeiführbar ist.

## Claims

1. Cutting system for machining a workpiece, wherein the cutting system comprises:
an expansion tool (918) comprising an external cone (916) for radially widening a portion of a cutting head, wherein the portion has a cutting edge (915) for machining a workpiece, and
a rotary cutting tool for machining the workpiece, wherein the cutting tool comprises: the cutting head (919) having a recess, wherein the recess has an internal cone (917), wherein the recess is intended to receive the external cone (916),
wherein the cutting system has a sleeve, wherein the sleeve is arranged between the hollow shank taper of the cutting head and the external cone of the expansion tool, **characterized in that** the sleeve consists of a softer material than the external cone and/or the cutting head, in order to allow particularly good sliding of the expansion tool and cutting head.

2. Cutting system according to Claim 1, wherein the expansion tool (918) comprises an external thread (911).

3. Cutting system according to either of Claims 1 and 2, wherein the cutting tool comprises:
a worm gear having a worm wheel (909) and a worm (905), wherein the worm gear has an internal thread (910).

4. Cutting system according to Claim 3, wherein the worm gear is mounted within the cutting tool by way of at least one rolling bearing (904, 907, 913, 914).

5. Cutting system according to one of the preceding claims, wherein the external cone (916) bears at least partially against the internal cone (917).

6. Cutting system according to one of the preceding claims, wherein the radial distance (920) of the cutting edge (915) from the longitudinal axis (921) of the cutting tool is variable by movement of the expansion tool (918) in the direction of the longitudinal axis (921).

7. Cutting system according to one of Claims 3 to 6, wherein the internal thread (910) is configured to be able to engage in the external thread (911).

8. Cutting system according to one of the preceding claims, wherein a movement of the expansion tool (918) in the longitudinal direction of the cutting tool is able to be brought about by rotation of the worm wheel (909).

## Revendications

1. Système de coupe pour l'usinage par enlèvement de copeaux d'une pièce, le système de coupe comprenant :
un outil d'étirage (918) comprenant un cône externe (916) pour élargir radialement une portion d'une tête de coupe, la portion présentant une arête de coupe (915) pour l'usinage par enlèvement de copeaux d'une pièce et
un outil de coupe rotatif pour l'usinage par enlèvement de copeaux de la pièce, l'outil de coupe comprenant : la tête de coupe (919) avec un évidement, l'évidement présentant un cône interne (917), l'évidement étant prévu pour recevoir le cône externe (916),
le système de coupe présentant une douille, la douille étant disposée entre le cône de tige creuse de la tête de coupe et le cône externe de l'outil d'étirage, **caractérisé en ce que** la douille se compose d'un matériau plus tendre que celui du cône externe et/ou de la tête de coupe afin de permettre un glissement particulièrement bon de l'outil d'étirage et de la tête de coupe.

2. Système de coupe selon la revendication 1, dans lequel l'outil d'étirage (918) comprend un filetage extérieur (911).

3. Système de coupe selon l'une quelconque des revendications 1 ou 2, dans lequel l'outil de coupe comprend :
un engrenage à vis sans fin avec une roue à denture hélicoïdale (909) et une vis sans fin (905), l'engrenage à vis sans fin présentant un filetage intérieur (910).

4. Système de coupe selon la revendication 3, dans lequel l'engrenage à vis sans fin est supporté à l'intérieur de l'outil de coupe par au moins un palier à roulement (904, 907, 913, 914).

5. Système de coupe selon l'une quelconque des revendications précédentes, dans lequel le cône externe (916) s'applique au moins en partie contre le cône interne (917).

6. Système de coupe selon l'une quelconque des revendications précédentes, dans lequel la distance radiale (920) de l'arête de coupe (915) à l'axe longitudinal (921) de l'outil de coupe peut être modifiée par un déplacement de l'outil d'étirage (918) dans la direction de l'axe longitudinal (921).

7. Système de coupe selon l'une quelconque des revendications 3 à 6, dans lequel le filetage intérieur (910) est réalisé de manière à pouvoir s'engager dans le filetage extérieur (911).

8. Système de coupe selon l'une quelconque des revendications précédentes, dans lequel un déplacement de l'outil d'étirage (918) dans la direction longitudinale de l'outil de coupe peut être provoqué par une rotation de la roue à denture hélicoïdale (909).
